# EUROPEAN PATENT APPLICATION

(11) **EP 4 712 295 A1**
(43) Date of publication of application: **18.03.2026**
(21) Application number: 24209684.0
(22) Date of filing: 30.10.2024
(51) Int. Cl.: H02J 7/00, H02J 7/02

(54) **INTELLIGENT POWER CHARGING DEVICE WITH A DIRECT CHARGING MODE**

(30) Priority: 17.09.2024 US 202418887115
(71) Applicant: Phihong Technology Co., Ltd., Taoyuan City 33383 (TW)
(72) Inventor: LIN, CHUN-CHAN, 333 Taoyuan (TW)
(74) Representative: Metida

(57) **Abstract**

A power charging device with a direct charging mode includes a power conversion module, having a primary-side circuit electrically connected to a primary side of a transformer and an output rectifier circuit electrically connected to a secondary side of the transformer, configured to convert an AC input voltage to a DC output voltage, and a power control module electrically connected to the power conversion module, configured to provide a direct charging mode or a regular USB type-C output power supply mode. The direct charging mode is activated to perform programmable charging when a direct charging agreement is confirmed between the AC to DC power charging device and battery pack, otherwise the regular USB type-C output power supply mode is activated.

## Description

### TECHNICAL FIELD

The present invention relates to a power charging device, specifically an intelligent power charging device with a direct charging mode.

### BACKGROUND

Currently, certain electronic devices, such as portable electronic devices (e.g., smartphones, laptops, tablet computers, etc.), may be charged with an alternating current (AC) source. These electronic devices are configured to receive or transfer power through universal serial bus (USB) connectors according to various USB power delivery protocols defined in a USB Power Delivery (USB -PD) specification.

With the development of fast charge technology and battery technology, various charging devices are developed. The aforementioned smartphones, tablets, and laptops have increasingly strong and diversified functions during these years. Therefore, the charger and adaptor market have a rapid growth for fast charging. The realization of the USB-PD fast charging protocol is based on the USB Type-C interface, which is interchangeable to all these devices. The power density and efficiency are still two important criterions.

The USB PD 3.0 specification with programmable power supply (PPS) can support up to 100 W of power transmission, thereby supporting power supply for larger devices such as laptops, monitors and faster charging of mobile devices. The PPS can provide suitable output according to load requirements through a communication protocol between PPS and the load. The output of USB PD 3.1 is further increased up to 48V/5A.

However, as the USB-PD has various output voltage value, such as 5V, 9V, 15V and 20V. Flexible output is needed based on USB type-C protocol. Therefore, conventional AC/DC charger architecture needs one more DC/DC converter, which makes the whole system efficiency low and cost high.

Further, the conventional AC/DC charger with USB-PD 3.1 utilized to charge Lithium battery pack/power battery pack has faced the issues of excessive temperature and low efficiency while performing charging.

According to the aforementioned drawbacks, there is a need for improvements to the AC/DC charger with USB output.

### SUMMARY OF THE INVENTION

In one aspect of the present invention, a power charging device with a direct charging mode is proposed, which includes a power conversion module, having a primary-side circuit electrically connected to a primary side of a transformer and an output rectifier circuit electrically connected to a secondary side of the transformer, configured to convert an AC input voltage to a DC output voltage, and a power control module electrically connected to the power conversion module, configured to provide the direct charging mode or a regular USB type-C output power supply mode. The direct charging mode is activated to perform programmable charging when a direct charging agreement is confirmed between the AC to DC power charging device and battery pack, otherwise the regular USB type-C output power supply mode is activated. The pre-stage circuit is an asymmetric half-bridge switching stage. The output rectifier circuit is a rectifier and output L/C filter with synchronous rectifier (SR) control

In one preferred embodiment, the power conversion module is disposed between the pre-stage circuit and the output rectifier circuit including the first feedback loop and a second feedback loop. The first feedback loop includes the first USB-C PD controller electrically coupled to the output rectifier circuit, the first photo coupler electrically coupled to the first USB-C PD controller and the primary-side circuit. The second feedback loop includes the first microcontroller unit (MCU) electrically coupled to the output rectifier circuit, a second photo coupler electrically coupled to the first MCU and the primary-side circuit.

In one preferred embodiment, the battery pack further includes a battery management system (BMS) control circuitry with at least the second USB-C PD controller disposed, the second USB-C PD controller electrically coupled to the first USB-C PD controller through a communication line.

In one preferred embodiment, the direct charging agreement is confirmed through a communication between the first USB-C PD controller and the second USB-C PD controller by sending vender defined message (VDM) built in the first USB-C PD controller to the second USB-C PD controller and getting a replied message back. The direct charging mode is activated by selecting the second feedback loop. The regular USB type-C output power supply mode is activated by selecting the first feedback loop.

In one preferred embodiment, the first MCU includes firmware with charging algorithm to perform charging processes to the battery pack. The charging processes include a pre-charging mode, a constant current mode, a constant voltage mode, and a cut-off (trickle) mode.

According to another aspect of the present invention, a power charging device with a direct charging mode to charge a battery pack is proposed, which includes a power conversion module, having an asymmetric half bridge switching stage (AHB) electrically connected to the primary side of a transformer and an output rectifier circuit electrically connected to the secondary side of the transformer, configured to convert an AC input voltage to a DC output voltage, and a power control module electrically connected to the power conversion module, configured to provide the direct charging mode or a regular USB type-C output power supply mode. The direct charging mode is activated to perform programmable charging when a direct charging agreement is confirmed between the AC to DC power charging device and battery pack, otherwise the regular USB type-C output power supply mode is activated. The power conversion module includes the first feedback loop and the second feedback loop disposed between the pre-stage circuit and the output rectifier circuit.

### BRIEF DESCRIPTION OF THE DRAWINGS

The components, features and advantages of the present invention will be elucidated through detailed descriptions of the preferred embodiments outlined in the specification and the accompanying drawings:
FIG. 1 illustrates a schematic block diagram of a charging system according to one preferred embodiment of the present invention.
FIG. 2 illustrates a schematic block diagram of an AC/DC power charging device in accordance with one preferred embodiment of the present invention.
FIG. 3A illustrates a schematic block diagram of a battery management system control circuitry of the charging system in accordance with one preferred embodiment of the present invention.
FIG. 3B illustrates a schematic block diagram of a battery management system control circuitry of the charging system in accordance with another preferred embodiment of the present invention.
FIG. 4 illustrate a battery pack charging curve utilizing the AC/DC power charging device in accordance with one preferred embodiment of the present invention.

### DETAILED DESCRIPTION

Some preferred embodiments of the present invention will now be described in greater detail. However, it is important to note that these preferred embodiments are provided for illustrative purpose and do not impose limitations on the scope of the present invention. The present invention can be implemented in various other embodiments beyond those explicitly described herein, and its scope is determined solely by the accompanying claims.

Over the past few years, the adoption trend and speed of USB Type-C ports have been seen. This is particularly true since the release of the USB PD (Power Delivery) 3.1 protocol, which raised the fast-charging power limit from 100 watts to 240 watts (supporting Extended Power Range, or EPR). This change has enabled the USB type-C to provide sufficient charging power for more devices, including large electronic devices that require higher-power charging, such as IoT devices, communication and security devices, automotive and medical devices, and more.

In the USB PD 3.1 protocol, the EPR mode contains three fixed voltage levels of 28 volts, 36 volts, and 48 volts, as well as three adjustable voltage supply (AVS). The voltages of 28 volts, 36 volts, and 48 volts in the USB PD 3.1 protocol correspond to applications using 6-, 8-, and 10-cell batteries, respectively. This allows USB PD's to be well-suited for devices such as computers, servers, motor drives, docking stations, displays loTs, and communication power supplies. Further, the USB PD 3.1 protocol can support up to 240W/48V power output and therefore extends the USB PD usage in fast charging applications.

In the present invention, the proposed intelligent AC/DC power charging device is used to directly charge a battery pack, where the intelligent AC/DC power charging device utilizes a switching mode power supply (SMPS) with asymmetric half-bridge topology, e. g., an asymmetric half-bridge flyback converter, to enhance the power conversion efficiency and reduce the temperature of the charging device during the charging process. The design of the intelligent charging device is based on the USB PD 3.1 protocol, its EPR voltage output range is 28V - 48V and an AVS functionality included.

By applying the USB PD 3.1 protocols to the intelligent AC/DC power charging device, the output voltage/current can be increased to a maximum output of 48V/5A, which is suitable for charging a battery pack composed of 10-12 strings of battery cells.

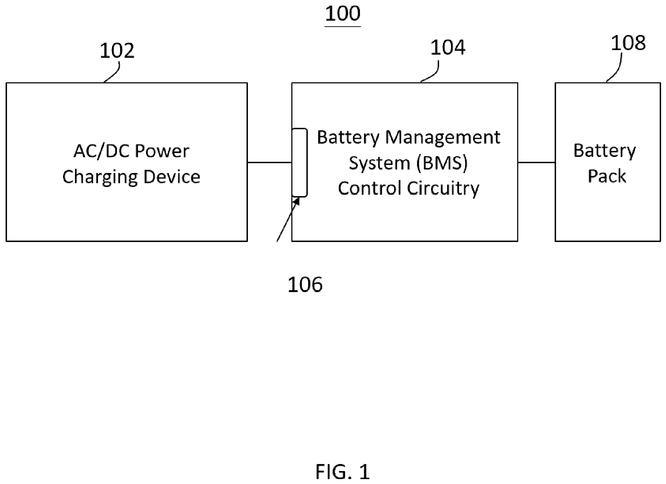

Referring to FIG. 1, it illustrates a schematic block diagram of a charging system 100, which includes an AC/DC power charging device 102 and a battery management system (BMS) control circuitry 104 used to charge a battery pack 108. The AC/DC power charging device 102 is electrically connected to the BMS control circuitry 104 via a power line and a communicate line (not shown here). The AC/DC power charging device 102 may include an E-maker cable to connect with a USB-C port 106 disposed in the BMS control circuitry 104 used to charge the battery pack 108 electrically coupled to the BMS control circuitry 104. In some embodiments, the AC/DC power charging device 102 can be a switching mode power supply (SMPS). In some embodiments, the BMS control circuitry 104 may be a printed circuit board (PCB) comprised of many functional blocks at least including: cutoff FETs, a cell voltage monitor, a cell voltage balance, temperature monitors, and a state machine (such as microcontroller unit, MCU).

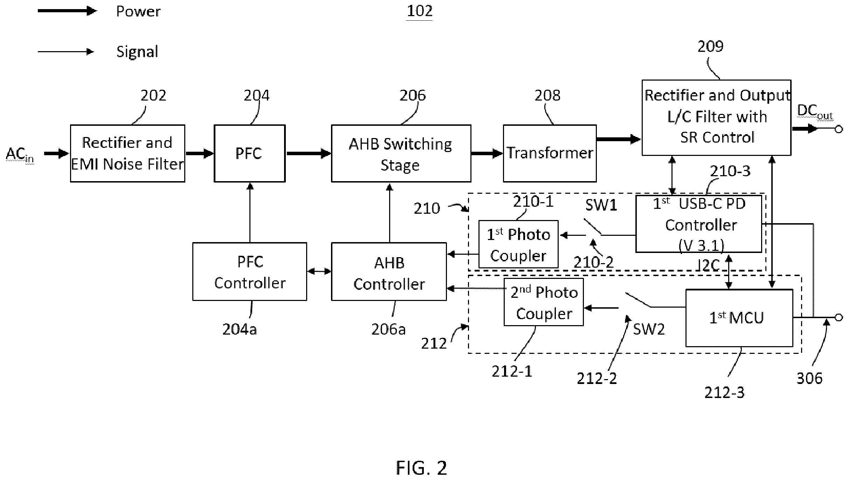

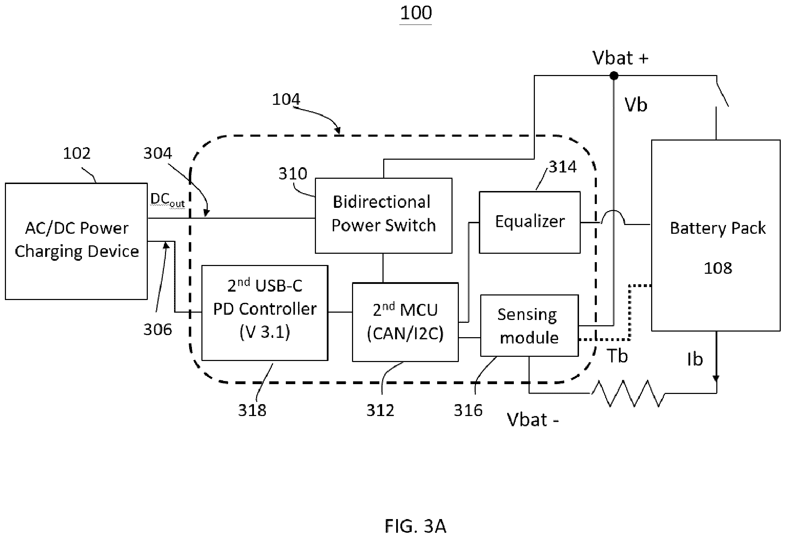

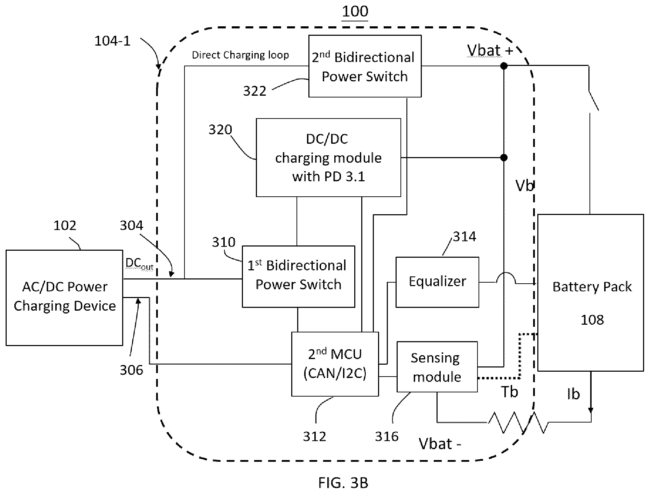

FIG. 2 illustrates schematic block diagram of the AC/DC power charging device 102, which includes a rectifier and EMI noise filter 202, a power factor correction (PFC) stage 204, a PFC controller 204a, an asymmetric half bridge (AHB) switching stage 206, an AHB controller 206a, a transformer 208, and a rectifier and output L/C filter with synchronous rectifier (SR) control 209. The rectifier and EMI noise filter 202 is connected to the power factor correction (PFC) stage 204, the power factor correction (PFC) stage 204 is connected to the asymmetric half bridge (AHB) switching stage 206, and the asymmetric half bridge (AHB) switching stage 206 is connected to the primary side of the transformer 208. The rectifier and output L/C filter with synchronous rectifier (SR) control 209 is connected to the secondary side of the transformer 208. An AC input voltage is filtered and rectified by the rectifier and EMI noise filter 202 to form a DC voltage, after adjusting phase by the PFC stage 204 and then outputting to an input terminal of the primary side of the transformer 208 via the AHB switching stage 206, the energy storage is controlled by the PFC controller 204a and the AHB controller 206a. The battery pack 108 (referring to FIG. 1) can be charged by controlling the DC output that is outputted from the output rectifier circuit, i.e., rectifier and output L/C filter with synchronous rectifier (SR) control 209, connected to the secondary side of the transformer 208 upon the request from a MCU disposed in the BMS control circuitry (referring to FIG. 3). In FIG. 2, there also exists two feedback loops, i.e., the first feedback loop 210 and the second feedback loop 212, which are respectively disposed between the rectifier and output L/C filter with synchronous rectifier (SR) control 209, i.e. the output of the AC/DC power charging device 102, and the AHB controller 206a of the AHB switching stage 206, where the AHB controller 206a is electrically coupled to the AHB switching stage 206. The first feedback loop 210 includes the first photo coupler 210-1, the first switch 210-2 and the first USB-C PD controller 210-3. The second feedback loop 212 includes the second photo coupler 212-1, the second switch 212-2 and the first MCU 212-3. The first USB-C PD controller 210-3 and the first MCU 212-3 can communicate with the BMS control circuitry 104 via the communication line 306. The charging process can be controlled depending on the communication between the AC/DC power charging device 102 and the BMS control circuitry 104, one of these two feedback loops will be selected to control (or adjust) the value of DC output through sending control signals to the AHB controller 206a and the PFC controller 204a to adjust ON/OFF signals of corresponding switches disposed in the PFC stage 204 and the AHB switching stage 206, therefore the DC output can be adjusted. Details of the actual charging process and related control methodology will be discussed later. In some embodiments, a primary-side circuit of the AC/DC charging device 102 may include at least the asymmetric half bridge (AHB) switching stage 206 electrically connected to a primary side of the transformer 208. The (AHB) switching stage 206 is controlled by the AHB controller 206a. The primary-side circuit of the AC/DC charging device 102 can further include the power factor correction (PFC) stage 204 coupled to the (AHB) switching stage 206.

In some embodiments, the AC/DC power charging device 102 is an AHB flyback converter. Combining the characteristics of conventional flyback converter and resonant converter, the reduction in voltages tress on the power MOSFET and the ability of the AHB flyback converter to achieve primary side MOSFET zero-voltage switching (ZVS) and output synchronous rectifier (SR) zero-current switching (ZCS) allow it to become a strong candidate for USB PD application. For 100W or above charger applications, PFC plus AHB can be used with flexible output voltage.

Referring to FIG. 3A, it illustrates a schematic block diagram of the battery management system (BMS) control circuitry 104 connected to the AC/DC power charging device 102 and the battery pack 108 electrically connected to the battery management system (BMS) control circuitry 104. The AC/DC power charging device 102 is electrically connected to the BMS control circuitry 104 via a power line 304 and a communicate line 306. The BMS control circuitry 104 includes a bidirectional power switch 310, the second microcontroller unit (MCU) 312 electrically connected to the bidirectional power switch 310, an equalizer 314 electrically connected to the second MCU 312, a sensing module 316 electrically connected the second MCU 312, and further includes the second USB-C PD controller 318 connected to the communication line 306 and the second MCU 312. In some embodiments, the bidirectional power switch 310 can be a PMOS FET connected to a NMOS FET back-to-back, which is controlled by the second MCU 312 to deliver the DC output power from the AC/DC power charging device 102 to charge the battery pack 108 that is electrically connected to the BMS control circuitry 104. The sensing module 316 is electrically connected to the second MCU 312 and the battery pack 108 to sense the parameters of the battery pack 108, such as the current Ib of the battery pack, the voltage Vb of the battery pack and the temperature Tb of the battery pack. In some embodiment, the equalizer 314 is electrically connected to the battery pack 108 to keep the voltage of each battery of the battery pack 108 the same. In some embodiments, the sensing module 316 may at least include a current sensor, a voltage sensor and a temperature sensor used to respectively detect the current Ib of the battery pack, the voltage Vb of the battery pack and the temperature Tb of the battery pack. In some embodiments, the AC/DC power charging device 102 can be a switching mode power supply (SMPS).

Battery Management System (BMS) control circuitry 104 is essential for the best performance of battery pack 108, which can achieve this by performing a number of tasks, such as monitoring, protecting, balancing, and reporting. The performance, longevity, and safety of battery systems are all guaranteed by each of these functions.

Referring FIGS. 1, 2 and 3A, as the AC/DC power charging device 102 is connected to the BMS control circuitry 104, the first USB-C PD controller 210-3 of the AC/DC power charging device 102 communicates with the second USB-C PD controller 318 of the BMS control circuitry 104 and the first USB-C PD controller 210-3 can use the built-in vender defined message (VDM), which contains command codes and can establish communication through the configuration channel (CC), to determine whether the connected battery package 108 can be directly charged. This confirmation for the direct charging agreement is performed through sending the VDM built in the first USB-C PD controller 210-3 to the second USB-C PD controller 318 and getting a replied message back, i.e., through USB handshaking.

In some embodiment, the charging mode disclosed by the present invention is based on PD 3.1 communication together with the identification of VDM identification code. The VDM identification code is a communication format defined by the customer. The content will define the four major format codes of VDM format code, which includes VDM Head Code, customer code (VID), specially defined output (PID header VDO) and product output voltage (Product VDO). There are also other communication formats of the communication codes specially defined for the specific project, including fixed and unfixed VDM format definitions.

In some embodiments, the communication mode between the AC/DC power charging device 102 and the BMS control circuitry 104 can be established as follows. When the AC/DC power charging device 102 is connected to the BMS control circuitry 104, the PD 3.1 authentication of both parties is completed, and the VDM identification code is also authenticated. The system, including the AC/DC power charging device 102 and the BMS control circuitry 104, will enter the charging mode (Battery mode).

In some embodiments, the charging process can include authentication process, which will first send a communication handshaking request from the AC/DC power charging device 102 (i.e. source), and then the BMS control circuitry 104 (sink) will reply and return the VDM format code. After the communication is completed, the BMS control circuitry 104 side PD IC (i.e., the second USB-C PD controller 318) will send the current status of the battery and the required battery voltage/current (Vb/Ib) to ask the AC/DC power charging device 102 to provide the required battery voltage/current (Vb/Ib) for charging. After the aforementioned charging process is completed, the BMS control circuitry 104 side PD IC (i.e., the second USB-C PD controller 318) will send out the current status of the battery and request to stop charging.

Once the stop charging request from the BMS control circuitry 104 is received, the internal PD IC (i.e., the first USB-C PD controller 210-3) of AC/DC power charging device 102 will send this request through the internal I2C communication mode to the first MCU 212-3. When the first MCU 212-3 receives the demand, it will stop providing the relevant voltage/current, i.e. control the AC/DC power charging device 102 to stop charging the the BMS control circuitry 104. At this time, the charging process is completed, and the PD IC (i.e., the first USB-C PD controller 210-3) of AC/DC power charging device 102 continues to enter the standby mode and returns to the normal PD 3.1 authentication mode (SPR mode).

In the case that the communication between the first USB-C controller 210-3 and the second USB-C PD controller 318 is established and the battery pack 108 supporting USB PD 3.1 protocol is also confirmed, the AC/DC power charging device 102 will activate the directly charging mode to perform programmable charging, the second feedback loop 212 will be selected by connecting the second switch 212-3 and disconnecting the first switch 210-2. In this situation, the first MCU 212-3 will communicate with the second MCU 312 of the BMS control circuitry 104 through the communication line 306, the AC/DC power charging device 102 will perform charging processes upon the request of the second MCU 312 of the BMS control circuitry 104 based on the detected parameters of the battery pack 108, i.e. the state of the battery pack, to charge the battery pack. The charging processed may include pre-charging, constant current (CC) charging, and constant voltage (CV) charging modes. The first MCU 212-3 is configured to monitor the output current Io and output voltage Vo of the AC/DC power charging device 102 and to execute control protocols to the first USB-C PD controller (with PD 3.1 protocols) 210-3 via I2C for enabling that the AC/DC power charging device 102 can perform charging with programmable power supply (PPS) characteristic, i.e., perform programmable charging for the battery pack 108. The charging processes can be performed through charging algorithms that are built-in the first MCU 212-3. In some embodiments, the programmable power supply (PPS) characteristic means that the power supply device allows external devices to dynamically adjust the output voltage and current characteristics of the power supply device within a certain range through the power supply interface based on a certain precision voltage and current adjustment step, such as the output power dynamic adjustment rules of PPS of PD3.0, AVS of PD3.1 and UFCS. In some embodiments, the first MCU 212-3 may include firmware with particular designed algorithms that are built-in inside it to obtain certain functionalities, such as battery voltage/current monitoring, charging current adjustment, temperature detection, pre-charging and safe shutdown, under voltage protection (UVP), over power protection (OPP), over voltage protection (OVP), over current protection (OCP), and over temperature protection (OTP), which also means that the AC/DC power charging device 102 can also have these functionalities. When the USB type-C port 106 between the BMS control circuitry 104 of battery pack 108 and the AC/DC power charging device 102 is disconnected, the USB type-C port 106 will cut off its power and enter into a safe state.

In the case that the first USB-C PD controller 210-3 can't receive correct VDM commands from the BMS control circuitry 104, for example there is no USB-C PD controller installed in the BMS control circuitry 104 or the USB-C PD controller installed in the BMS control circuitry 104 doesn't meet required USB PD protocols, the communication between them is failed and the AC/DC power charging device 102 will switch to a regular USB type-C output power supply mode. The regular USB type-C output power supply mode is controlled by the first USB-C PD controller 210-3, through selecting the first feedback loop 210 by disconnecting the second switch 212-2 and connecting the first switch 210-2, to provide standard 5/9/15/20V output for charging general consumer devices in accordance with the USB PD 3.1 specification.

In other scenario, the AC/DC power charging device 102 disclosed by the present invention can also be applied to client's system, which needs the AC/DC power charging device 102 to be compatible with PD 3.1, including SPR mode and EPR mode, and to provide power delivery with two different modes. In addition, another charging path can be added on the battery system side and add another (the second) bidirectional back-to-back switch, this will be discussed in FIG. 3B. As long as the battery system authenticates to the VDM identification code, the internal bi-directional anti-backwash switch can be turned on. The direct charging source, i.e., AC/DC power charging device 102 can also output the charging voltage and current required by the system to directly charge the battery system (such as the charging communication mode function disclosed above).

For the aforementioned scenario, please refer to FIG. 3B, it illustrates a schematic block diagram of the battery management system (BMS) control circuitry 104-1 connected to the AC/DC power charging device 102 and the battery pack 108 electrically connected to the battery management system (BMS) control circuitry 104. The AC/DC power charging device 102 is electrically connected to the BMS control circuitry 104 via a power line 304 and a communicate line 306. The BMS control circuitry 104-1 includes the first bidirectional power switch 310, the second microcontroller unit (MCU) 312 electrically connected to the first bidirectional power switch 310, an equalizer 314 electrically connected to the second MCU 312, a sensing module 316 electrically connected the second MCU 312, and further includes a DC/DC charging module (having PD 3.1 communication) 320 connected to the first bidirectional power switch 310 configured to establish the charging path from the DC/DC charging module 320, to the first bidirectional power switch 310, and then to the battery pack 108. In addition, the second bidirectional power switch 322 is disposed between the AC/DC power charging device 102 and the battery pack 108 via the power line 304 to establish a directly charging path. In some embodiments, the first bidirectional power switch 310 and the second bidirectional power switch 322 are controlled by the second MCU 312. To conclude, the charging system illustrated in FIG. 3B demonstrate that the charging path from the DC/DC charging module 320, to the first bidirectional power switch 310, and then to the battery pack 108 can be activated, while there is no VDM authentication been established; the directly charging path can be activated, while there is a VDM authentication been established.

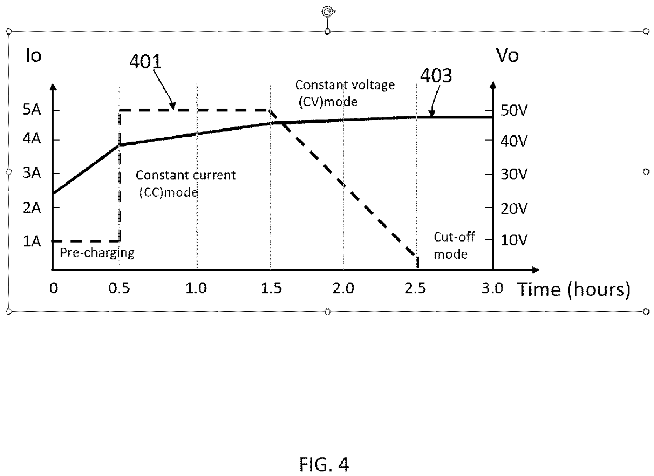

FIG. 4 illustrates an exemplary charging curve of a battery pack that utilizes the AC/DC power charging device 102 mentioned in FIGS. 1-3 to charge the battery pack 108. In FIG. 4, the output current Io and the output voltage Vo curves of the AC/DC power charging device 102 during a complete charging process are depicted, where the dashed curve 401 represents the output current Io of the AC/DC power charging device 102 and the solid curve 403 represents the output voltage Vo of the AC/DC power charging device 102. The entire charging process includes a pre-charging mode, a constant current mode, a constant voltage mode, and a cut-off (trickle) mode. The entire charging time is completed within 2.5 hours. The peak charging power is around 240 W, which meets PD 3.1 profile.

According to the contents described above, the present invention proposes an AC/DC power charging device used to charge a battery pack, which provides the following advantages: (1) no additional DC/DC charging module or converter is needed for the AC/DC power charging device proposed in the present invention; (2) the AC/DC power charging device can provide a variety of safe charging functionalities; (3) the AC/DC power charging device can provide directly charging to a battery pack with maximum 240 W based on the PD 3.1 specification power, which is superior to currently announced USB PD 3.1 fast charging products which can only provide stable output voltages in certain fixed ranges through the USB type-C interface.

While we have described various embodiments of the present invention, it is important to note that these are presented as examples and not limitations. The present invention can be practiced in a wide range of other embodiments beyond those explicitly described, and the scope of the invention is exclusively defined by the accompanying claims.

## Claims

1. A power charging device (102) with a direct charging mode, comprising:
a transformer (208), an AHB switching stage (206) electrically connected to a primary side of said transformer (208) and a rectifier and output L/C filter (209) electrically connected to a secondary side of said transformer (208), wherein said transformer (208), said AHB switching stage (206) and said rectifier and output L/C filter (209) are configured to convert an AC input voltage to a DC output voltage;
an AHB controller (206a) electrically connected to said AHB switching stage (206), configured to provide said direct charging mode or a regular USB type-C output power supply mode; and
wherein said direct charging mode is activated to perform programmable charging when a direct charging agreement is confirmed between said power charging device (102) and a battery pack (108), otherwise said regular USB type-C output power supply mode being activated.

2. The power charging device of claim 1, wherein said transformer (208) is disposed between said AHB switching stage (206) and said rectifier and output L/C filter (209), wherein a first feedback loop (210) and a second feedback loop (212) are disposed between said rectifier and output L/C filter (209) and said AHB controller (206a); wherein said first feedback loop (210) includes a first USB-C PD controller (210-3) electrically coupled to said rectifier and output L/C filter (209), wherein a first photo coupler (210-1) is electrically coupled to said first USB-C PD controller (210-3) and said AHB controller (206a); wherein said second feedback loop (212) includes a first microcontroller unit (MCU) (212-3) electrically coupled to said rectifier and output L/C filter (209), a second photo coupler (212-1) electrically coupled to said first MCU (212-3) and said AHB controller (206a).

3. The power charging device of claim 2, wherein said battery pack (108) is coupled to a battery management system (BMS) control circuitry (104) with at least a second USB-C PD controller (318) which is electrically coupled to said first USB-C PD controller (210-3).

4. The power charging device of claim 3, wherein said direct charging agreement is confirmed through a communication between said first USB-C PD controller (210-3) and said second USB-C PD controller (318) by sending a vender defined message (VDM) built in said first USB-C PD controller (210-3) to said second USB-C PD controller (318) and getting a replied message back.

5. The power charging device of claim 2, wherein said direct charging mode is activated by selecting said second feedback loop (212),

6. The power charging device of claim 2, wherein said regular USB type-C output power supply mode is activated by selecting said first feedback loop (210).

7. The power charging device of claim 2, wherein said first MCU (212-3) includes a firmware with charging algorithms to perform charging processes to said battery pack (108), wherein said charging processes include a pre-charging mode, a constant current mode, a constant voltage mode, and a cut-off (trickle) mode.

8. The charging device of claim 2, wherein said first MCU (212-3) includes designed algorithms to obtain battery voltage/current monitoring, charging current adjustment, temperature detection, pre-charging and safe shutdown, under voltage protection (UVP), over power protection (OPP), over voltage protection (OVP), over current protection (OCP), and over temperature protection (OTP).

9. A power charging device (102) with a direct charging mode to charge a battery pack (108), comprising:
a transformer (208), an AHB switching stage (206) electrically connected to a primary side of said transformer (208) and a rectifier and output L/C filter (209) electrically connected to a secondary side of said transformer (208), wherein said transformer (208), said AHB switching stage (206) and said rectifier and output L/C filter (209) are configured to convert an AC input voltage to a DC output voltage;
an AHB controller (206a) electrically connected to said AHB switching stage (206), configured to provide said direct charging mode or a regular USB type-C output power supply mode; wherein said direct charging mode is activated to perform programmable charging when a direct charging agreement is confirmed between said power charging device (102) and a battery pack (108), otherwise said regular USB type-C output power supply mode being activated; and
wherein a first feedback loop (210) and a second feedback loop (212) are disposed between said AHB controller (206a) and said rectifier and output L/C filter (209).

10. The power charging device of claim 9, wherein said direct charging mode is activated by selecting said second feedback loop (212), wherein said regular USB type-C output power supply mode is activated by selecting said first feedback loop (210).

11. The power charging device of claim 9, wherein said first feedback loop (210) includes a first USB-C PD controller (210-3) electrically coupled to said rectifier and output L/C filter (209), a first photo coupler (210-1) electrically coupled to said first USB-C PD controller (210-3) and said AHB controller (206a); wherein said second feedback loop (212) includes a first microcontroller unit (MCU) (212-3) electrically coupled to said rectifier and output L/C filter (209), wherein a second photo coupler (212-1) is electrically coupled to said first MCU (212-3) and said AHB controller (206a).

12. The power charging device of claim 11, wherein said first MCU (212-3) includes a firmware with charging algorithms to perform charging processes to said battery pack (108), wherein said charging processes include a pre-charging mode, a constant current mode, a constant voltage mode, and a cut-off (trickle) mode.

13. The charging device of claim 11, wherein said first MCU (212-3) includes designed algorithms to obtain battery voltage/current monitoring, charging current adjustment, temperature detection, pre-charging and safe shutdown, under voltage protection (UVP), over power protection (OPP), over voltage protection (OVP), over current protection (OCP), and over temperature protection (OTP).

14. The power charging device of claim 11, wherein said battery pack (108) is coupled to a battery management system (BMS) control circuitry (104) with at least a second USB-C PD controller (318) which is electrically coupled to said first USB-C PD controller (210-3).

15. The power charging device of claim 14, wherein said direct charging agreement is confirmed through a communication between said first USB-C PD controller (210-3) and said second USB-C PD controller (318) by sending a vender defined message (VDM) built in said first USB-C PD controller (210-3) to said second USB-C PD controller (318) and getting a replied message back.

## Amended claims

### Amended claims in accordance with Rule 137(2) EPC.

1. A power charging device (102) with a direct charging mode, comprising a transformer (208), an asymmetric half bridge, AHB, switching stage (206) electrically connected to a primary side of said transformer (208) and a rectifier and output L/C filter (209) electrically connected to a secondary side of said transformer (208), wherein said transformer (208), said AHB switching stage (206) and said rectifier and output L/C filter (209) are configured to convert an AC input voltage to a DC output voltage; an AHB controller (206a) electrically connected to said AHB switching stage (206), configured to provide said direct charging mode or a regular USB type-C output power supply mode; and wherein said direct charging mode includes confirming a direct charging agreement through a USB handshaking between a first USB-C PD controller (210-3) of said power charging device (102) and a second USB-C PD controller (318) of a battery management system control circuitry (104) connected to a battery pack (108) and is activated to perform programmable charging through charging algorithms when said direct charging agreement is confirmed, otherwise said regular USB type-C output power supply mode being activated to provide standard output for charging said battery pack (108) in accordance with a USB PD 3.1 specification, said power charging device (102) being **characterized in that**:
said transformer (208) is disposed between said AHB switching stage (206) and said rectifier and output L/C filter (209), wherein a first feedback loop (210) and a second feedback loop (212) are disposed between said rectifier and output L/C filter (209) and said AHB controller (206a); wherein said first feedback loop (210) includes said first USB-C PD controller (210-3) electrically coupled to said rectifier and output L/C filter (209), wherein a first photo coupler (210-1) is electrically coupled to said first USB-C PD controller (210-3) and said AHB controller (206a); and wherein said second feedback loop (212) includes a first microcontroller unit, MCU, (212-3) electrically coupled to said rectifier and output L/C filter (209), a second photo coupler (212-1) electrically coupled to said first MCU (212-3) and said AHB controller (206a).

2. The power charging device of claim 1, wherein said battery pack (108) is coupled to a said battery management system control circuitry (104) with at least said second USB-C PD controller (318) which is electrically coupled to said first USB-C PD controller (210-3).

3. The power charging device of claim 2, wherein said direct charging agreement is confirmed through a communication between said first USB-C PD controller (210-3) and said second USB-C PD controller (318) by sending a vender defined message, VDM, built in said first USB-C PD controller (210-3) to said second USB-C PD controller (318) and getting a replied message back.

4. The power charging device of claim 1, wherein said direct charging mode is activated by selecting said second feedback loop (212),

5. The power charging device of claim 1, wherein said regular USB type-C output power supply mode is activated by selecting said first feedback loop (210).

6. The power charging device of claim 1, wherein said first MCU (212-3) includes a firmware with said charging algorithms to perform charging processes to said battery pack (108), wherein said charging processes include a pre-charging mode, a constant current mode, a constant voltage mode, and a cut-off, trickle, mode.

7. The charging device of claim 1, wherein said first MCU (212-3) includes designed algorithms to obtain battery voltage/current monitoring, charging current adjustment, temperature detection, pre-charging and safe shutdown, under voltage protection, over power protection, over voltage protection, over current protection, and over temperature protection.
